Europäisches Patentamt

European Patent Office

Office européen des brevets

(19)

(11) Veröffentlichungsnummer: **0 326 658**

**A1**

## (12) EUROPÄISCHE PATENTANMELDUNG

(21) Anmeldenummer: 88118598.7

(22) Anmeldetag: 09.11.88

(51) Int. Cl.⁴: **C23C 4/06** , **F16J 9/00**

(30) Priorität: 02.02.88 DE 3802920

(43) Veröffentlichungstag der Anmeldung:
09.08.89 Patentblatt 89/32

(84) Benannte Vertragsstaaten:
DE ES FR GB IT

(71) Anmelder: GOETZE AG
Bürgermeister-Schmidt-Strasse 17
D-5093 Burscheid 1(DE)

(72) Erfinder: Buran, Ulrich, Dipl.-Ing.
Neuenhaus 26a
D-5093 Burscheid(DE)
Erfinder: Neuhäuser, Hans-Jochem, Dr.
Hofer Weg 13
D-5060 Bergisch Gladbach 2(DE)

(54) Verschleissfeste Beschichtung.

(57) Eine verschleißfeste Beschichtung auf den Laufflächen von Maschinenteilen, wie insbesondere den
Laufflächen von Kolbenringen für Verbrennungskraftmaschinen, die aus einer Spritzpulvermischung mit
40 bis 80 Gewichtsprozent Molybdän, 0 bis 35 Gewichtsprozent Hartstoff und 10 bis 50 Gewichtsprozent einer niedrigschmelzuenden Legierung unter
Verwendung einer Lichtbogenspritzpistole in einem
Trägergas aus einem mit dem Molybdän reagierenden Gas hergestellt ist, ist besonders verschleißfest,
brandspursicher und ausbruchsicher und kann mit
langer Lebensdauer betriebssicher als Kolbenringbeschichtung für hoch belastete Verbrennungskraftmaschinen eingesetzt werden.

EP 0 326 658 A1

## Verschleißfeste Beschichtung

Die Erfindung betrifft eine verschleißfeste Beschichtung auf den Laufflächen von auf reibenden Verschleiß ausgesetzten Maschinenteilen, wie insbesondere von Kolbenringen für Verbrennungskraftmaschinen, die überwiegend aus Molybdän besteht, und die in einem thermischen Spritzverfahren auf die Laufflächen aufgetragen ist.

Verschleißfeste Beschichtungen auf den Laufflächen von Kolbenringen für Verbrennungskraftmaschinen bestehen vielfach aus in einem thermischen Spritzverfahren aufgetragenem Molybdän. Molybdänschichten sind brandspursicher, und derartig beschichtete Kolbenringe können vorteilhaft in thermisch hoch belasteten Verbrennungskraftmaschinen eingesetzt werden. Als thermische Spritzverfahren zum Aufspritzen des Molybdäns werden das Flammspritzverfahren und das Plasmaspritzverfahren angewendet, bei denen das Molybdän in einer Flamme aus brennbaren Gasgemischen beziehungsweise in einem Plasmalichtbogen aufgeschmolzen und, vom Gasstrom mitgerissen, auf den Kolbenring aufgespritzt wird.

Im Flammspritzverfahren aufgetragene Molybdänschichten besitzen trotz einer hohen Härte eine geringere Verschleißfestigkeit als galvanische Hartchromschichten, und flammgespritzte Molybdänschichten müssen zur Erreichung der gleichen Lebensdauer mit entsprechend größerer Schichtdicke aufgetragen werden. In dickeren Molybdänschichten bauen sich aber verstärkt Eigenspannungen auf, und es kann bei dicken Schichten unter extremen Belastungen leichter zu Schichtrissen und Schichtausbrüchen kommen.

Im Plasmaspritzverfahren aufgetragene Molybdänschichten weisen wegen der wesentlich höheren Spritztemperatur höhere Schichtfestigkeiten auf als im Flammspritzverfahren aufgetragene Molybdänschichten, im Plasmaspritzverfahren aufgetragene Molybdänschichten sind aber relativ weich, und sie verschleißen infolgedessen wesentlich schneller. Die zur Abhilfe mit größerer Schichtdicke aufgetragenen Molybdänschichten besitzen dann die gleichen Probleme wie im Flammspritzverfahren aufgetragene Molybdänschichten.

Zur Erhöhung der Belastbarkeit der thermisch aufgespritzten Molybdänschichten hat man daher schon nach beispielsweise der DE-PS 20 32 722 das Molybdän legiert oder man setzt Mischungen des Molybdäns mit Hartstoffen und Bindemetall ein.

So besteht nach der US-PS 4.334.929 eine Plasmaspritzpulvermischung für Kolbenringbeschichtungen aus 29 bis 51 % Molybdän, 5 bis 25 % Chromkarbid als Hartstoff und 32 bis 51 % einer niedrigschmelzenden Nickelchromlegierung als Bindemetall.

Nach der DE-PS 32 47 054 besteht eine Plasmaspritzpulvermischung für Kolbenringbeschichtungen aus 20 bis 60 % Molybdän, 25 bis 50 % Molybdänkarbid als Hartstoff und bis zu 30 % einer niedrigschmelzenden Legierung als Bindemetall.

Nach der DE-PS 35 15 107 besteht eine Plasmaspritzpulvermischung für Kolbenringbeschichtungen aus 10 bis 45 % Molybdän, 5 bis 25 % Hartstoff und 45 bis 70 % einer nieddrigschmelzenden Legierung.

Die mit diesen Spritzpulvermischungen aus Molybdän, Hartstoff und Bindemetall beschichteten Kolbenringe laufen zwar mit gutem Erfolg in vielen Anwendungsfällen, für andere Anwendungsfälle, vor allem bei extremen Belastungen, sind sie jedoch nicht voll befriedigend geeignet, und zwar muß der Fachmann bei Zusammenstellung seiner Spritzpulverzusammensetzungen Kompromisse schließen.

Einerseits soll der Molybdängehalt einer Spritzschicht für Kolbenringe für thermisch hoch belastete Ringe zur Brandspursicherheit möglichst hoch sein; diese Schichten sind dann aber weniger verschleißfest, und er setzt zu seiner Mischung zur Erhöhung der Verschleißfestigkeit Hartstoffe hinzu. Mit Zunahme des Hartstoffes sinkt der Molybdängehalt und damit die Brandspurfestigkeit der Ringe, und vor allem wird die Festigkeit der Schichten durch schlechten Verbund der hochschmelzenden Hartstoffteilchen mit dem Molybdän herabgesetzt. Durch Zugabe niederigschmelzender Legierungen als Bindemetall wird zwar der Verbund der Teilchen untereinander und damit die Festigkeit der Schicht heraufgesetzt, die Verschleißfestigkeit und die Brandspursicherheit der Schichten wird hiermit aber entsprechend herabgesetzt. Die vorbekannten, im Plasmaspritzverfahren aufgetragenen Kolbenringbeschichtungen sind daher noch nicht für alle Problemstellungen voll befriedrigend.

Der vorliegenden Erfindung liegt daher die Aufgabe zugrunde, eine verschleißfeste Beschichtung gemäß Oberbegriff des Hauptpatentanspruches zu schaffen, die auch unter extremen mechanischen und thermischen Belastungen vor allem brandspursicher, ausbruchsicher und verschleißfest ist. Das Herstellungsverfahren der Schichten soll zugleich einfacher und kostensparender als die bisherigen Auftragsverfahren sein.

Erfindungsgemäß wird diese Aufgabe durch eine verschleißfeste Beschichtung gelöst, die aus einer Spritzpulvermischung von 40 bis 80 Gewichtsprozent Molybdän mit 0 bis 35 Gewichtsprozent eines Hartstoffes und zwischen 10 bis 50 Gewichtsprozent einer niedrigschmelzenden Legierung durch ein Lichtbogenspritzverfahren unter Verwendung eines mit dem Molybdän unter Bildung von Hartstoffen reagierenden Trägergases hergestellt ist. Damit die Spritzpulvermischung gut in einem Lichbogenspritzverfahren verarbeitet werden kann, besteht sie aus einem Metallfülldraht, dessen Mantel aus dem Molybdän oder der niedrigschmelzenden Legierung der Spritzpulvermischung gebildet ist, und einer Füllung aus den Restbestandteilen der Mischung, so daß sich beim Abschmelzen des Spritzdrahtes eine Spritzmaterialzusammensetzung entsprechend der Mischungszusammensetzung des Hauptpatentanspruches ergibt. Als Lichtbogenspritzanlage, bei der der Spritzdraht im elektrischen Lichtbogen geschmolzen und durch die Trägergase auf das Substrat aufgespritzt wird, wird bevorzugt eine aus der DE-PS 35 33 966 bekannte Anlage verwendet, da sich durch ihre besondere Spritzdüsenkonstruktion besonders fein zerstäubte Spritzpulverschmelztröpfchen zum Aufspritzen erzeugen lassen.

Durch das erfindungsgemäß eingesetzte Lichtbogenspritzverfahren wurden mit verschiedenen Spritzpulverzusammensetzungen gemäß der Mischung des Hauptpatentanspruches Kolbenringe beschichtet. Die Kolbenringe wurden im Prüfstandlauf getestet, und die Spritzschichten wurden metallurgisch untersucht. Dabei zeigte es sich, daß die Schichten überraschenderweise trotz eines hohen Molybdängehaltes von bevorzugt sogar über 55 bis 80 Gewichtsprozent hart und in Testläufen verschleißfest waren. Offensichtlich bilden die beim Lichtbogenspritzen verwendeten, mit dem Molybdän reagierenden Trägergase aus bevorzugt Stickstoff, Sauerstoff, Druckluft und/oder kohlenstoffabgebenden Gasen, wie Acethylen, Methan oder Ethan, zusammen mit dem Molybdän durch Lösen im Gefüge oder auch chemische Reaktion besonders harte Molybdänteilchen, und die Schichten wurden verschleißfest. Durch den hohen Molybdängehalt waren die Schichten auch bei hohen thermischen Belastungen brandspurfest. Bedingt durch die hohe Verschleißfestigkeit, konnte der Hartstoffanteil in der Schicht aus bevorzugt Hartmetallen, Metalloxiden, Metallkarbiden, Metallcarbonitriden, Metallnitriden, wie Chromkarbid, Chrom, Molybdänkarbid, Aluminiumoxid oder Bornitrid wesentlich herabgesetzt werden, ohne die Verschleißfestigkeit der Schichten nachteilig zu beeinflussen. Es wurde sogar gefunden, daß bei beschichteten Kolbenringen für Pkw- und Lkw-Dieselmotoren oder Ottomotoren mit hoher Temperaturbelastung auf Hartstoffzusatz sogar ganz verzichtet werden beziehungsweise ihr Gehalt maximal nur bis zu 10 Gewichtsprozent sein kann. Bei Schiffs- und Aggregatdieselmotoren, bei denen die Kolbenringbeschichtungen vor allem schweren mechanischen Belastungen ausgesetzt sind, muß der Hartstoffanteil über 10 Gewichtsprozent bis maximal 25 Gewichtsprozent betragen, um eine ausreichende Beschichtung zu erhalten.

Als niedrigschmelzende Legierungen werden bevorzugt Nickelchromlegierungen mit 75 bis 85 Gewichtsprozent Nickel und 15 bis 25 Gewichtsprozent Chrom, Nickelaluminiumlegierungen mit 90 bis 95 Gewichtsprozent Nickel und 5 bis 10 Gewichtsprozent Aluminium sowie Nickelchromaluminiumlegierungen mit 73 bis 78 Gewichtsproeznt Nickel, 4 bis 6 Gewichtsprozent Aluminium und 17 bis 22 Gewichtsprozent Chrom verwendet. Durch die Zugabe dieser Legierungen in Mengen von 10 bis 50 Gewichtsprozent wird die Schichtfestigkeit der Schicht erhöht beziehungsweise ihre Ausbruchfestigkeit verbessert, und es ist sinnvoll, diese Legierungen vor allem zur Verbesserung der Betriebssicherheit hinzuzufügen.

Durch die Erfindung können somit Beschichtungen auf den Laufflächen von vor allem Kolbenringen für Verbrennungskraftmaschinen hergestellt werden, die auch unter extremen Belastungen vor allem ausreichend verschleißfest, ausbruchfest und brandspursicher sind. Die beschichteten Kolbenringe können mit langer Lebensdauer betriebssicher ohne Störung verwendet werden.

Mit der erfindungsgemäß zur Schichtherstellung verwendeten Lichtbogenspritzanlage sind die Schichten einfach und kostengünstig herstellbar, und die Schichten selbst sind durch den verminderten Anteil an teuren Hartstoffen preisgünstiger. Bedingt durch die erzielte verbesserte Verschleißfestigkeit, reichen gegebenenfalls auch extrem kleine Schichtstärken der Beschichtungen von minimal nur 0,1 mm zur Erzielung einer ausreichenden Kolbenringlebensdauer aus. Dünne Schichten sind wegen ihrer geringen Eigenspannungen zusätzlich ausbruchsicher und durch Verwendung von weniger Material preisgünstiger.

Mit den folgenden Spritzpulverzusammensetzungen wurden im Lichtbogenspritzverfahren mit der aus der DE-PS 35 33 966 bekannten Anlage unter Verwendung von Preßluft als Trägergas Kolbenringe beschichtet, und es wurden Ringe mit besonders guten Ergebnissen erhalten:

1. 70 bis 80 Gewichtsprozent Molybdän
20 bis 30 Gewichtsprozent selbstfließende Legierung aus Nickel, Chrom, Eisen, Bor und Silizium
0 bis 10 Gewichtsprozent Hartstoff
Die mit dieser Zusammensetzung beschichteten Ringe erwiesen sich für den Einsatz in Pkw- und Lkw-Dieselmotoren besonders geeignet.

2. 40 bis 65 Gewichtsprozent Molybdän
15 bis 5 Gewichtsprozent niedrigschmelzende Legierung aus einer Nickellegierung mit 15 bis 25 % Chrom
10 bis 35 Gewichtsprozent Hartstoff aus Chromkarbid

(Cr₃C₂)

Die mit dieser Zusammensetzung beschichteten Ringe erwiesen sich zum Einsatz in Schiffsdiesel- und Aggregatdieselmotoren als besonders geeignet.

3. 55 bis 70 Gewichtsprozent Molybdän
20 bis 45 Gewichtsprozent einer niedrigschmelzenden Nickellegierung mit 15 bis 25 Gewichtsprozent Chrom
0 bis 10 Gewichtsprozent Chrom als Hartstoff
Die mit dieser Zusammensetzung beschichteten Ringe erwiesen sich zum Einsatz in Ottomotoren besonders gut geeignet.

**Ansprüche**

1. Verschleißfeste Beschichtung auf den Laufflächen von auf reibenden Verschleiß beanspruchten Maschinenteilen, wie insbesondere auf den Laufflächen von Kolbenringen für Verbrennungskraftmaschinen, die überwiegend aus Molybdän besteht und in einem thermischen Spritzverfahren auf die Laufflächen aufgetragen ist, dadurch gekennzeichnet, daß die verschleißfeste Beschichtung aus einem Spritzmaterial aus 40 bis 80 Gewichtsprozent Molybdän, 0 bis 35 Gewichtsprozent eines Hartstoffes und zwischen 10 bis 50 Gewichtsprozent einer niedrigschmelzenden Legierung durch ein Lichtbogenspritzverfahren in einem mit dem Molybdän unter Bildung von Hartstoffen reagierenden Trägergas hergestellt ist.

2. Verschleißfeste Beschichtung nach Anspruch 1, dadurch gekennzeichnet, daß das Spritzmaterial zur Herstellung der Beschichtung die Form eines gefüllten Drahtes besitzt, dessen Hülle aus Molybdän oder der niedrigschmelzenden Legierung besteht, und dessen Füllung aus den Restbestandteilen so zusammengesetzt ist, daß sich beim Schmelzen im Lichtbogen eine Spritzmaterialzusammensetzung wie im Hauptpatentanspruch ergibt.

3. Verschleißfeste Beschichtung nach den Ansprüchen 1 und 2, dadurch gekennzeichnet, daß die Beschichtung mit einer Lichtbogenspritzanlage nach dem DE-Patent 35 33 966 hergestellt ist.

4. Verschleißfeste Beschichtung nach mindestens einem der Ansprüche 1 bis 3, dadurch gekennzeichnet, daß die Beschichtung in der Lichtbogenspritzanlage unter Verwendung von Methan, Ethan, Acetylen, Stickstoff und/oder Sauerstoff als Trägergas hergestellt ist.

5. Verschleißfeste Beschichtung nach mindestens einem der Ansprüche 1 bis 4, dadurch gekennzeichnet, daß die verwendeten Hartstoffe aus harten Metallen, harten Metalloxiden, harten Metallcarbiden und/oder harten Metallnitriden bestehen.

6. Verschleißfeste Beschichtung nach mindestens einem der Ansprüche 1 bis 5, dadurch gekennzeichnet, daß die niedrigschmelzenden Legierungen aus Nickellegierungen mit Chrom-, Aluminium-, Silizium- und/oder Boranteilen bestehen.

7. Verschleißfeste Beschichtung nach mindestens einem der Ansprüche 1 bis 6, dadurch gekennzeichnet, daß die Schichtdicke der Beschichtung mindestens 0,1 mm beträgt.

8. Verschleißfeste Beschichtung nach mindestens einem der Ansprüche 1 bis 7, dadurch gekennzeichnet, daß die Beschichtung auf den Laufflächen von Kolbenringen zum Einsatz in Pkw- und Lkw-Dieselmotoren aus einer Spritzmaterialzusammensetzung mit 70 bis 80 Gewichtsprozent Molybdän, 20 bis 30 Gewichtsprozent einer Nickellegierung mit Chrom-, Eisen-, Bor- und Siliziumgehalten und 0 bis 10 Gewichtsprozent eines Hartstoffes hergestellt ist.

9. Verschleißfeste Beschichtung nach mindestens einem der Ansprüche 1 bis 7, dadurch gekennzeichnet, daß die Beschichtung auf den Laufflächen von Kolbenringen für Schiffsdiesel- und Aggregatdieselmotoren aus einer Spritzpulverzusammensetzung aus 40 bis 65 Gewichtsprozent Molybdän, 10 bis 50 Gewichtsprozent einer niedrigschmelzenden Nickelchromlegierung und 10 bis 35 Gewichtsprozent Hartstoff hergestellt ist.

10. Verschleißfeste Beschichtung nach mindestens einem der Ansprüche 1 bis 7, dadurch gekennzeichnet, daß die Beschichtung auf den Laufflächen für den Einsatz in Ottomotoren aus einer Spritzpulverzusammensetzung von 55 bis 75 Gewichtsprozent Molybdän, 20 bis 45 Gewichtsprozent einer niedrigschmelzenden Nickel-Chromlegierung und 0 bis 10 Gewichtsprozent Chrom hergestellt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 233 072 (T. WATANABE) <br> * Ansprüche 1-3 * <br> --- | 1 | C 23 C 4/06 <br> F 16 J 9/00 |
| Y | FR-A-2 234 382 (SOCIETE NOUVELLE DE METALLISATION) <br> * Ansprüche 1-3 * <br> --- | 1 | |
| A | PATENT ABSTRACTS OF JAPAN, Band 7, Nr. 155 (C-175)[1300], 7. Juli 1983; & JP-A-58 64 371 (HONDA GIKEN KOGYO K.K.) 16-04-1983 <br> * Zusammenfassung * <br> --- | 1 | |
| A | DE-A-3 621 184 (GLYCO-METALL-WERKE DAELEN & LOOS) <br> * anspruch 3 * <br> --- | 1 | |
| A | EP-A-0 118 307 (TELATEK OY) <br> * Anspruch 1 * <br> --- | 2,4 | |
| A | PATENT ABSTRACTS OF JAPAN, Band 7, Nr. 100 (C-164)[1245], 28. April 1983; & JP-A-58 27 971 (HITACHI SEISAKUSHO K.K.) 18-02-1983 <br> * Zusammenfassung * <br> --- | 4 | RECHERCHIERTE SACHGEBIETE (Int. Cl.4) <br><br> C 23 C <br> F 16 J |
| A | US-A-3 837 817 (Y. NAKAMURA) <br> * Ansprüche 1,2 * <br> --- | 6,9 | |
| A | US-A-3 556 747 (G.F. HYDE) <br> * Ansprüche 1-3 * <br> ----- | 7 | |

Der vorliegende Recherchenbericht wurde für alle Patentansprüche erstellt

| Recherchenort | Abschlußdatum der Recherche | Prüfer |
|---|---|---|
| DEN HAAG | 12-05-1989 | ELSEN D.B.A. |